# EUROPÄISCHE PATENTANMELDUNG

(11) **EP 1 236 949 A2**
(43) Veröffentlichungstag der Anmeldung: **04.09.2002**
(21) Anmeldenummer: 02003772.7
(22) Anmeldetag: 20.02.2002
(51) Int. Cl.: F16L 59/02

(54) **Wärmedämmformkörper**

(30) Priorität: 28.02.2001 DE 10110731
(71) Anmelder: E.G.O. Elektro -Gerätebau GmbH, 75038 Oberderdingen (DE)
(72) Erfinder: Kicherer, Robert, 75038 Oberderdingen (DE); Kratel, Günter, Dr., 87471 Durach (DE); Mikschl, Bernhard, 75056 Sulzfeld (DE); John, Erich, 75173 Pforzheim (DE); Mangler, Matthias, 76307 Karlsbad (DE)
(74) Vertreter: Patentanwälte Ruff, Wilhelm, Beier, Dauster & Partner

(57) **Zusammenfassung**

Ein Wärmedämmformkörper (2) besteht aus verpresstem und/oder gesintertem Wärmedämmmaterial und enthält pyrogene Kieselsäure, anorganischen Füllstoff, Trübungsmittel und Fasern. Die BET-Oberfläche des Wärmedämmmaterials beträgt weniger als 100 m²/g, beispielsweise 10 - 100 m²/g. Dadurch nimmt der Wärmedämmformkörper (2) weniger Wasser auf. Der Wärmedämmformkörper (2) kann vorteilhaft bei Strahlungsheizungen als Unterlage für Heizleiter (5) verwendet werden.

## Beschreibung

Die Erfindung betrifft einen Wärmedämmformkörper bestehend aus verpreßtem und/oder gesintertem Wärmedämmmaterial enthaltend pyrogene Kieselsäure, anorganischen Füllstoff, Trübungsmittel und Fasern.

Derartige Wärmedämmformkörper sind bekannt und beispielsweise in der EP 0 618 399 B1 beschrieben. Zur Erzielung guter Wärmeisoliereigenschaften besitzen die Wärmedämmmaterialien dieser Wärmedämmformkörper sehr hohe spezifische Oberflächen, die im Bereich von mind. 120 m²/g (nach BET gemessen, wie in ASTM Special Technical Publication No. 51, S. 1941 ff. beschrieben) liegen.

Bedingt durch diese großen Oberflächen und die Tatsache, dass der Hauptbestandteil des Wärmedämmmaterials der beschriebenen Wärmedämmformkörper pyrogene Kieselsäure ist, die bekanntermaßen Silanolgruppen auf ihrer Oberfläche trägt und daher stark hydrophil ist, ist das Adsorptionsvermögen dieser Materialien gegenüber Wasser stark ausgeprägt. Wenn ein solcher Formkörper im praktischen Einsatz innerhalb kurzer Zeit einer hohen thermischen Energie ausgesetzt wird, entsteht explosionsartig Wasserdampf, der die Struktur des Formkörpers zerstört.

Dieser Effekt tritt beispielsweise bei wärmedämmenden Formkörpern auf, die als Wärmeisolierung in Strahlungsheizungen für Keramikkochfelder verwendet werden, wobei die Strahlungsheizungen typischerweise in ein bis fünf Sekunden zum Glühen gebracht werden. Um eine Erhöhung der Wasserdampfdiffusion vom Inneren zur Oberfläche des Formkörpers und damit die Vermeidung von lokalem Überdruck im Inneren des Formkörpers, der die Struktur des Formkörpers zerstören würde, zu erreichen, weisen bisher beschriebene Wärmedämmformkörper Kanalporen auf. Diese Kanalporen haben jedoch den entscheidenden Nachteil, dass sie die Wärmeisoliereigenschaften verschlechtern. Zudem verschlechtert sich die mechanische Stabilität des Materials. Außerdem ist die Ausbildung solcher Poren mit zusätzlichem Arbeitsaufwand und Mehrkosten verbunden.

Ein weiteres Problem besteht darin, dass der beim Erhitzen entstehende Wasserdampf an kälteren Stellen, so u. a. auch an den Elektronikbauteilen, kondensiert, was zu Störungen in der Elektronik führen kann.

Aufgabe der Erfindung ist die Schaffung eines Wärmedämmformkörpers, dessen Wärmedämmmaterial ein so stark vermindertes Wasseradsorptionspotential aufweist, dass Probleme mit Wasserdampf abgestellt werden können. Dabei sollen die Isoliereigenschaften möglichst gut bleiben.

Diese Aufgabe wird erfindungsgemäß durch einen Wärmedämmformkörper mit den Merkmalen des Anspruchs 1 gelöst. Bevorzugte Ausbzw. Weiterbildungen des erfindungsgemäßen Wärmedämmformkörpers sind in den Unteransprüchen gekennzeichnet. Der Gegenstand der Ansprüche wird durch ausdrückliche Bezugnahme zum Inhalt der Beschreibung gemacht.

Die mit der Erfindung erzielten Vorteile bestehen darin, dass durch die Verringerung der BET-Oberfläche des Wärmedämmmaterials auf insgesamt ca. 10 - 100 m²/g das Wasseradsorptionsvermögen gesenkt werden kann. Selbst bei schockartigem Erhitzen behalten die erfindungsgemäßen Wärmedämmformkörper ihre Struktur bei. Kanalporen o. dgl. werden nicht mehr benötigt.

Erfindungsgemäß bevorzugt verwendetes Wärmedämmmaterial weist folgende Zusammensetzung auf:
1 - 70 Gew.-% pyrogene Kieselsäure,
10 - 55 Gew.-% Trübungsmittel und
1 - 10 Gew.-% Fasermaterial.

Bevorzugt ist 1 - 35 Gew.-% anorganische Füllstoffe enthalten. Des weiteren kann vorteilhaft 0 - 15 Gew.-% Stabilisatoren enthalten sein.

Besonders bevorzugte Zusammensetzungen enthalten:
35 - 50 Gew.-% pyrogene Kieselsäure,
30 - 40 Gew.-% Trübungsmittel,
5 - 25 Gew.-% anorganische Füllstoffe,
5 - 10 Gew.-% Stabilisatoren und
ca. 3 Gew.-% Fasermaterial.

Vorteilhafterweise werden als pyrogene Kieselsäuren solche mit einer BET-Oberfläche von 50 bis 200 m²/g eingesetzt. Die Einsatzmenge an pyrogener Kieselsäure, die vorzugsweise zwischen 35 und 50 Gew.-% liegt, hängt von dieser BET-Oberfläche ab. Je höher die BET-Oberfläche desto niedriger ist die Einsatzmenge.

Die Wärmeleitfähigkeit liegt vorzugsweise bei einer Meßtemperatur von 400°C bei weniger als 0,035 W/mK, insbesondere bei ca. 0,025 W/mK. Bei 1000°C entspricht dies etwa 0,08 W/mK.

Als Trübungsmittel können Ilmenit, Titanoxid/Rutil, Eisen II-/Eisen III-Mischoxid, Chromoxid, Zirkonoxid sowie deren Mischungen eingesetzt werden. Vorteilhafterweise kommen Zirkonsilicat und Siliciumcarbid zum Einsatz.

Beispiele für Füllstoffe sind Metalloxide und Hydroxide der III. und IV. Hauptgruppe und/oder der IV. Nebengruppe des Periodensystems. Vorzugsweise werden Oxide des Siliciums, des Aluminiums, des Zirkons und des Titans eingesetzt. Beispiele hierfür sind z.B. für Silicium Lichtbogenkieselsäure oder gefällte Kieselsäure-Aerogele, für Aluminium Al₂O₃ oder Al(OH)₃ sowie für Titan Rutil. Es können auch Mischungen derselben eingesetzt werden. Vorteilhaft kommen Lichtbogenkieselsäure und Aluminiumoxide zum Einsatz. Die BET-Oberflächen liegen zwischen 1,5 und 25 m²/g mit einem Gew.-%-Anteil von 10 bis 30 Gew.-%.

Vorteilhaft enthält das Material Stabilisatoren, um die Beständigkeit zu erhöhen. Diese Stabilisatoren sind bevorzugt Oxide oder Hydroxide des Aluminiums, so z.B. Al₂O₃, AIO(OH) und Al(OH)₃. Zur Stabilisierung können ebenfalls Phosphate, wie z.B. Kalcium-hydrogenes Pyrophosphat eingesetzt werden.

Beispiele für Fasermaterialien, sind Keramikfasern löslicher und unlöslicher Art, Quarzglasfasern, Kieselsäurefasern, Fasern mit einem Gehalt an SiO₂ von mindestens 96 Gew.-% und Glasfasern wie E-Glasfasern und R-Glasfasern sowie Mischungen einer oder mehrerer der genannten Faserarten. Sie besitzen vorzugsweise einen Durchmesser größer als 6 Mikrometern und eine Länge von 1 bis 25 mm.

Das Material kann einerseits in Aufnahmeteile wie Schalen o.dgl. als verdichtete Mischung eingepreßt werden. Andererseits kann es ohne Umhüllung zu Formkörpern verpreßt und anschließend bei Temperaturen von 400 bis 1000 °C gesintert werden. Hierzu können Sinterhilfsmittel verwendet werden. Beispiele solcher Sinterhilfsmittel sind in der EP 29 227 offenbart. Vorzugsweise werden Boride des Aluminiums, des Zirkons, des Kalziums und des Titans, insbesondere Borcarbid, eingesetzt.

Es folgt ein Vergleich bei einem Wärmedämmformkörper zwischen einer herkömmlichen Vergleichsmischung und zwei Mischungen nach der Erfindung:

Die Versuche wurden mit einem Wärmedämmformkörper (WDFT) mit einem Durchmesser von 180 mm durchgeführt. Die Mischungen wurden in einem Zyklonmischer bei 3000 U/min bei einem Einsatzgewicht von 1 kg für 5 min gemischt. Der WDFT wurde auf einer hydraulischen Presse bei einem Druck von ca. 25 kg/cm² gepreßt.
1) Vergleichsmischung:

| | |
|---|---|
| 60 Gew.-% Kieselsäure | BET-Oberfläche 200 m²/g |
| 2,5 Gew.-% Kieselsäurefaser | |
| 37,2 Gew.-% Zirkonsilikat | BET-Oberfläche 13 m²/g |
| 0,3 Gew.-% Borcarbid | |
| gesamte | BET-Oberfläche 125 m²/g |

Gewicht WDFT 135 g
Dichte WDFT 0,35 g/cm³
Tellertemperatur am Außenboden 235 °C
WDFT im Feuchtraum bei 30 °C und 93% relativer Luftfeuchte;
Feuchteaufnahme:

| | |
|---|---|
| 24 h | 11,5 g |
| 48 h | 13,3 g |
| 168 h | 14,6 g |

2) erste erfindungsgemäße Mischung mit Zirkonsilikat:

| | |
|---|---|
| 40 Gew.-% Kieselsäure | BET-Oberfläche 130 m²/g |
| 2 Gew.-% Kieselsäurefaser | |
| 35 Gew.-% Zirkonsilikat | BET-Oberfläche 13 m²/g |
| 18 Gew.-% Lichtbogenkieselsäure | BET-Oberfläche 30 m²/g |
| 5 Gew.-% Aluminiumhydroxid | BET-Oberfläche 8 m²/g |
| gesamte | BET-Oberfläche 65 m²/g |

Gewicht WDFT 135 g
Dichte WDFT 0,35 g/cm³
Tellertemperatur am Außenboden 244 °C
WDFT im Feuchtraum bei 30 °C und 93% relativer Luftfeuchte;
Feuchteaufnahme:

| | |
|---|---|
| 24h | 4,2g |
| 48h | 5,0g |
| 168 h | 6,1 g |

Reduzierung der Wasseraufnahme um 58 % im Vergleich zur Vergleichsmischung
3) zweite erfindungsgemäße Mischung mit Siliciumcarbid:

| | |
|---|---|
| 40 Gew.-% Kieselsäure | BET-Oberfläche 130 m²/g |
| 2 Gew.-% Kieselsäurefaser | |
| 35 Gew.-% Siliciumcarbid | BET-Oberfläche 13 m²/g |
| 18 Gew.-% Lichtbogenkieselsäure | BET-Oberfläche 30 m²/g |
| 5 Gew.-% Aluminiumoxid | BET-Oberfläche 8 m²/g |

Gewicht WDFT 135 g
Dichte WDFT 0,35 g/cm³
Tellertemperatur am Außenboden 235 °C
WDFT im Feuchtraum bei 30 °C und 93% relativer Luftfeuchte;
Feuchteaufnahme:

| | |
|---|---|
| 24 h | 4,1 g |
| 48 h | 4,7g |
| 168 h | 5,1 g |

Reduzierung der Wasseraufnahme um 65 % im Vergleich zur Vergleichsmischung

Die Mischungen 2) und 3) zeigen nach 168 h Lagerung im Feuchtraum beim schnellen Aufglühen (innerhalb 4 sec) keine strukturellen Veränderungen, insbesondere kein Aufgehen oder Aufplatzen. Die sonstigen Eigenschaften der Wärmedämmformkörper konnten beibehalten werden. Die thermische Isolierwirkung der Mischung 3) ist so gut wie bei der Vergleichsmischung.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränkt die unter diesen gemachten Aussagen nicht in ihrer Allgemeingültigkeit.

Eine Ausführungsform der Erfindung ist in den Zeichnungen dargestellt. Diese zeigen:
- Fig. 1: einen Schnitt durch einen Strahlungsheizkörper mit einem erfindungsgemässen Wärmedämmformkörper und
- Fig. 2: eine Schrägansicht des Strahlungsheizkörpers aus Fig. 1.

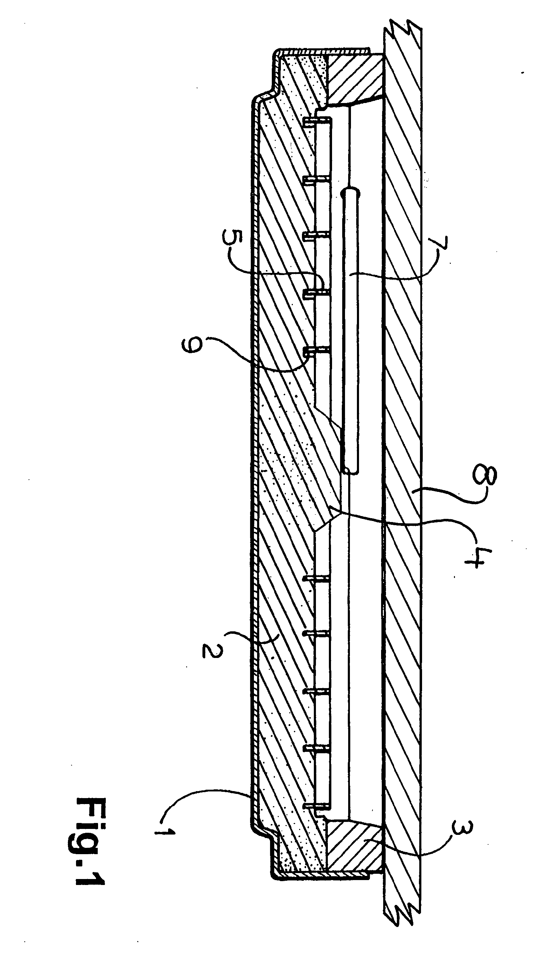

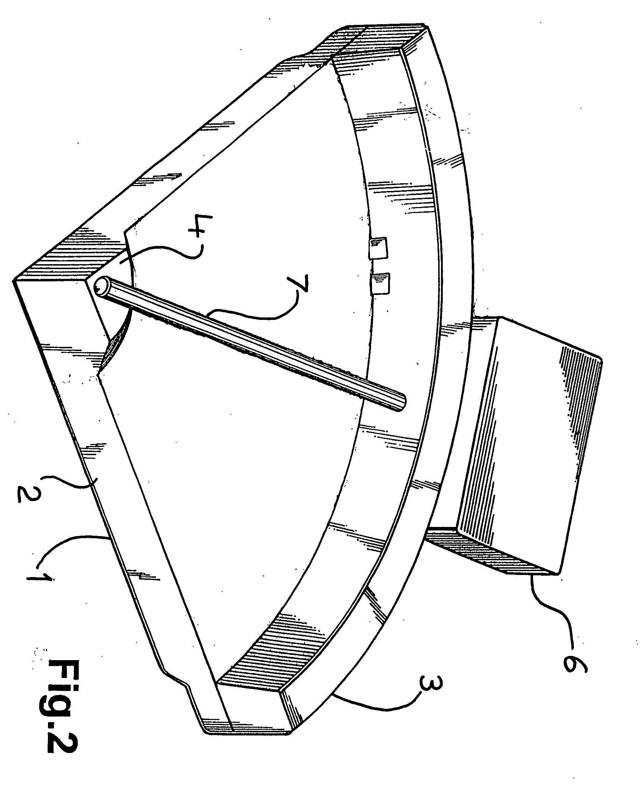

In den Figuren 1 und 2 ist jeweils ein elektrischer Strahlungsheizkörer dargestellt, der an die Unterseite einer Glaskeramikplatte 8 angedrückt ist. Der Strahlungsheizkörper weist eine Aufnahmeschale 1, vorzugsweise aus Blech, auf. In dieser ist ein Wärmedämmformkörper als Unterlage 2 eingelegt. Die Unterlage 2 trägt in Ausnehmungen 9 auf bekannte Art und Weise Heizleiter 5.

Im Mittelbereich weist die Unterlage 2 eine kegelstumpfförmige Erhebung 4 auf. Diese dient als Auflage für den Temperaturfühler 7 des Temperaturwächters 6. Dies ist aus dem Stand der Technik hinreichend bekannt.

Im Außenbereich der Unterlage 2 liegt auf dieser innerhalb der Aufnahmeschale 1 eine außen umlaufenden Rand 3 auf. Dieser Rand 3 dient als Distanzelement, um den Strahlungsheizkörper in einem vorbestimmten Abstand zu dem Glaskeramikplatte 8 zu halten. Ausserdem bildet sie eine Wärmeisolierung zur Seite hin.

In Figur 2 ist der besseren Übersichtlichkeit halber auf die Darstellung der Heizleiter 5 sowie der zugehörigen Ausnehmungen 9 verzichtet worden.

Aus den Zeichnungen ist zu ersehen, dass die Anforderungen an die Wärmedämmung in Form der Unterlage 2 und das Distanzelement in Form des Randes 3 unterschiedlich sind. Die Unterlage 2 trägt den Heizleiter 5 und ist damit zum einen höheren Temperaturen ausgesetzt. Hier ist wiederum die bessere Verträglichkeit des schnellen Aufheizens von Bedeutung. Zum anderen muss sie zur Befestigung der Heizleiter 5 ausgebildet sein.

Der Rand 3 wiederum benötigt eine gewisse Festigkeit, vor allem Druckfestigkeit, um den Anpressdruck aufnehmen zu können. Dazu kommen Anforderungen an die Eigenschaften als Wärmedämmung.

## Patentansprüche

1. Wärmedämmformkörper bestehend aus verpreßtem und/oder gesintertem Wärmedämmmaterial enthaltend pyrogene Kieselsäure, anorganischen Füllstoff, Trübungsmittel und Fasern, wobei die BET-Oberfläche des Wärmedämmmaterials weniger als 100 m²/g, vorzugsweise 10 - 100 m²/g, beträgt.

2. Wärmedämmformkörper nach Anspruch 1, **dadurch gekennzeichnet, daß** der Wärmedämmformkörper (2) nach Lagerung in einem Feuchtraum 3-7 Gew.-%, bezogen auf sein Gewicht, vorzugsweise 5 Gew.-%, an Wasser aufnimmt.

3. Wärmedämmformkörper nach Anspruch 1 oder 2, **dadurch gekennzeichnet, dass** die Wärmeleitfähigkeit bei 400°C weniger als 0,045 W/mK, vorzugsweise ca. 0,025 W/mK, beträgt.

4. Wärmedämmformkörper nach einem der vorhergehenden Ansprüche, **dadurch gekennzeichnet, daß** der Anteil an pyrogener Kieselsäure weniger als 70 Gew.-% beträgt, vorzugsweise 30 - 50 Gew.-%.

5. Wärmedämmformkörper nach einem der vorhergehenden Ansprüche, **dadurch gekennzeichnet, dass** die BET-Oberfläche der pyrogenen Kieselsäure 50 bis 150 m²/g beträgt.

6. Wärmedämmformkörper nach einem der vorhergehenden Ansprüche, **dadurch gekennzeichnet, dass** der Anteil an Trübungsmittel 10 - 50 Gew.-%, vorzugsweise ca. 35 Gew.-%, beträgt.

7. Wärmedämmformkörper nach Anspruch 6, **dadurch gekennzeichnet, dass** das Trübungsmittel eine Siliciumverbindung ist, vorzugsweise SiC.

8. Wärmedämmformkörper nach einem der vorhergehenden Ansprüche, **dadurch gekennzeichnet, dass** der Anteil an Fasern 1 - 10 Gew.-%, vorzugsweise ca. 2 Gew.-%, beträgt.

9. Wärmedämmformkörper nach einem der vorhergehenden Ansprüche, **dadurch gekennzeichnet, dass** das Wärmedämmmaterial anorganische Härtungsmittel, insbesondere Borcarbid, enthält.

10. Wärmedämmformkörper nach einem der vorhergehenden Ansprüche, **dadurch gekennzeichnet, dass** das Wärmedämmmaterial Stabilisatoren, insbesondere Aluminiumverbindungen, enthält, wobei vorzugsweise der Anteil an Stabilisator 1 - 10 Gew.-%, vorzugsweise 3 - 8 Gew.-%, beträgt.

11. Wärmedämmformkörper nach einem der vorhergehenden Ansprüche, **dadurch gekennzeichnet, dass** das Wärmedämmmaterial Metalloxide der III. und IV. Hauptgruppe sowie der IV. Nebengruppe enthält, insbesondere Lichtbogenkieselsäure, wobei vorzugsweise die Lichtbogenkieselsäure eine BET-Oberfläche von 10 - 35 m²/g aufweist und insbesondere der Gehalt an Lichtbogenkieselsäure maximal 35 Gew.-% beträgt.
